(19) Europäisches Patentamt

European Patent Office

Office européen des brevets

(11) **EP 0 825 343 B1**

(12) **FASCICULE DE BREVET EUROPEEN**

(45) Date de publication et mention
de la délivrance du brevet:
**12.06.2002 Bulletin 2002/24**

(51) Int Cl.[7]: **F02P 17/12**, G01L 23/22

(21) Numéro de dépôt: **97401852.5**

(22) Date de dépôt: **01.08.1997**

(54) **Procédé et dispositif de diagnostic de l'allumage d'un moteur thermique par mesure de l'impédance d'ionisation**

Verfahren und Vorrichtung zur Zündungsdiagnose für eine Wärmekraftmaschine mit Messung der Ionisierungsimpedanz

Method and device for ignition diagnostics of a thermic engine by means of measuring the ionisation impedance

(84) Etats contractants désignés:
**BE DE ES GB IT**

(30) Priorité: **21.08.1996 FR 9610342**

(43) Date de publication de la demande:
**25.02.1998 Bulletin 1998/09**

(73) Titulaire: **RENAULT**
**92109 Boulogne-Billancourt (FR)**

(72) Inventeur: **Agneray, André**
**92100 Boulogne Billancourt (FR)**

(74) Mandataire: **Fernandez, Francis Lionel et al**
**Renault,**
**Technocentre,**
**S.0267 - TCR AVA 0-56,**
**1, avenue du Golf**
**78288 Guyancourt (FR)**

(56) Documents cités:
**EP-A- 0 344 349        US-A- 4 454 560**
**US-A- 5 179 928**

**Description**

L'invention est relative à un procédé de diagnostic de l'allumage d'un moteur thermique de véhicule automobile, commandé électroniquement, ainsi qu'à un dispositif mettant en oeuvre ce procédé.

Actuellement, pour s'assurer du bon fonctionnement des systèmes de dépollution équipant les véhicules automobiles, il faut s'assurer de la bonne qualité de la combustion du mélange air-carburant dans les cylindres et donc diagnostiquer les ratés de combustion correspondant à une absence totale de combustion dans la chambre à la suite d'un raté d'allumage ou correspondant à une mauvaise combustion dans un ou plusieurs cylindres.

Une solution connue à ce problème consiste à mesurer le courant d'ionisation des gaz dans les cylindres, au travers de chaque bougie d'allumage polarisée par une tension continue, après l'étincelle éclatant entre les électrodes de la bougie. Ce courant est contrôlé par l'état d'ionisation des gaz, lui-même contrôlé par la cinétique chimique de la combustion, et permet alors le diagnostic de combustion ainsi que le diagnostic de cliquetis. Cette solution est développée dans le système SAAB TRIONIC qui effectue la mesure du courant à la borne basse tension de l'enroulement secondaire de la bougie. Il présente l'inconvénient d'induire un surcoût lié à l'adjonction d'une connectique supplémentaire dans le module de puissance d'allumage du moteur, ou d'un nouveau boîtier et d'une connectique supplémentaire dans le calculateur électronique d'injection du moteur quand celui-ci commande aussi l'allumage. De plus, dans les systèmes d'allumage à bougie-crayon où les bobines sont intégrées dans le puits de bougie, l'accès au secondaire de la bobine devient de plus en plus délicat.

Le but de l'invention est de réaliser la mesure de l'impédance d'ionisation au travers de la bobine elle-même, par simple adjonction de modules électroniques supplémentaires dans le calculateur d'injection ou le module de puissance d'allumage, sans modification de câblage.

Pour cela, un premier objet de l'invention est un procédé de diagnostic de l'allumage d'un moteur à combustion interne, comprenant une bobine d'allumage dont l'enroulement primaire est relié à un calculateur électronique de commande et dont l'enroulement secondaire est relié à au moins une bougie d'un cylindre, par détection du signal d'ionisation des gaz dans les cylindres, caractérisé en ce qu'il comprend une étape de compensation en fréquence de la bobine pour augmenter sa fréquence de résonance à une valeur supérieure à deux fois la fréquence du signal d'ionisation à détecter, effectuée avant la mesure de l'impédance d'ionisation des gaz dans les cylindres du moteur avec attaque de l'enroulement primaire de la bobine par un courant d'amplitude constante, délivré par un oscillateur asservi sur la fréquence de résonance parallèle de la bobine, et lecture de la tension aux bornes de la bobine.

Un second objet de l'invention est un dispositif de diagnostic de l'allumage d'un moteur à combustion interne mettant en oeuvre le procédé précédent, caractérisé en ce qu'il comprend :

- un circuit de compensation en fréquence de la bobine constitué par une capacité $C_{co}$, en série avec l'enroulement primaire de la bobine et dont la valeur permet de compenser l'inductance de fuite $L_{fp}$ de la bobine ramenée au primaire à la fréquence recherchée, et par une inductance $L_{co}$ en parallèle avec l'enroulement primaire et dont la valeur permet d'augmenter la fréquence de résonance parallèle de la bobine jusqu'à la valeur recherchée;
- un circuit oscillateur délivrant un courant d'amplitude constante au circuit de compensation et asservi sur la fréquence de résonance parallèle de la bobine;
- un circuit de détection de l'impédance d'ionisation par mesure de la tension aux bornes de la bobine.

D'autres caractéristiques et avantages de l'invention apparaîtront à la lecture de la description suivante du procédé et du dispositif de mise en oeuvre selon plusieurs modes de réalisation non limitatifs, illustrée par les figures suivantes qui sont:

- la figure 1: un schéma électrique équivalent d'un système d'allumage commandé, dans un moteur thermique;
- la figure 2: un schéma électrique d'une bobine d'allumage ramené au primaire;
- la figure 3: un schéma électrique d'une bobine d'allumage compensée en fréquence selon l'invention, ramené au primaire;
- la figure 4: un schéma de principe du dispositif de diagnostic selon l'invention;
- les figures 5 à 9: des schémas électroniques de plusieurs variantes de réalisation d'un oscillateur asservi en fréquence utilisé dans un dispositif de diagnostic selon l'invention.

Les éléments remplissant les mêmes fonctions en vue des mêmes résultats portent les mêmes références dans les différentes figures.

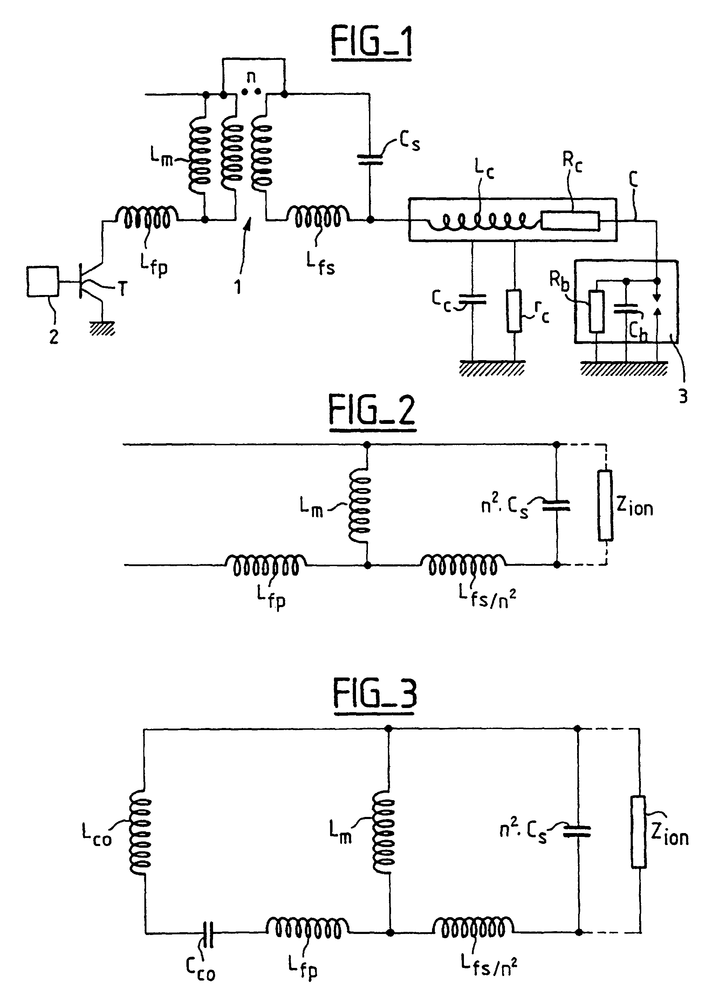

L'invention s'applique aux allumages sans distributeur. La figure 1 est un schéma électrique équivalent d'un système d'allumage commandé par un module électronique, dans un moteur thermique, destiné à créer une étincelle aux bornes de la bougie affectée à chaque cylindre du moteur. Ce système d'allumage comprend une bobine d'allumage 1 dont l'enroulement primaire est relié d'une part à la tension $V_{cc}$ positive de la batterie, généralement 12 volts, et d'autre part à un module de puissance d'allumage 2 par l'intermédiaire d'un transistor T. L'enroulement secondaire de la bobine 1, qui a un rapport de transformation de valeur n, est relié d'un côté à la tension $V_{cc}$ de la batterie du véhicule et de l'autre côté à une bougie d'allumage 3 par l'intermédiaire d'un câble haute tension. Ce câble haute tension est supprimé dans le cas des allumages utilisant une bobine par bougie, la bobine étant alors montée directement sur la bougie. Electriquement, l'enroulement primaire de la bobine 1 est représenté par une inductance ou self magnétisante $L_m$ et une self de fuite primaire $L_{fp}$, comme l'enroulement secondaire est représenté par une self de fuite secondaire $L_{fs}$ et une capacité secondaire $C_s$ voisine de 50 pF. La bougie 3 est équivalente à une résistance $R_b$, comprise entre 1 et 100 mégohms en parallèle avec une capacité $C_b$ de 10 pF, et le câble la reliant à la bobine est équivalent à une self $L_c$ en série avec une résistance $R_c$, de 6 kiloohms, présentant une capacité de fuites $C_c$, comprise entre 0 et 100 pF, en parallèle avec une résistance $r_c$ supérieure à 5 mégohms. L'étincelle entre les électrodes de la bougie 3 est obtenue en faisant fonctionner la bobine en "flyback", c'est-à-dire que la fermeture du transistor T, commandée par le module d'allumage 2, charge en courant la self magnétisante $L_m$ de la bobine qui restitue son énergie à l'enroulement secondaire, lors du blocage du transistor.

L'impédance électrique vue au primaire de la bobine 1 peut être représentée par le schéma de la figure 2, constituée à la fois par une self égale à la self de fuite secondaire ramenée au primaire, donc divisée par le carré du rapport de transformation n de la bobine $(L_{fs}/n^2)$, en série avec la self de fuite primaire $L_{fp}$, et par une capacité égale à la capacité secondaire ramenée au primaire, donc multipliée par le carré du rapport n $(n^2*C_s)$, en parallèle avec les inductances de la bobine formant ainsi un circuit bouchon. La mesure de l'impédance d'ionisation $Z_{ion}$ peut donc être faite à la fréquence de résonance du circuit bouchon représentant la bobine et qui est voisine de 5 Khz. Cependant, pour permettre une utilisation de la mesure de cette impédance d'ionisation en diagnostic sur véhicule, cette fréquence de résonance, qui est de l'ordre de quelques kilohertz, est trop faible.

Selon un mode particulier de réalisation utilisé dans le cas où la bobine d'allumage a une fréquence propre de résonance faible par rapport à la fréquence du signal d'ionisation à analyser, une première caractéristique de l'invention consiste à compenser la bobine d'allumage pour remonter sa fréquence propre de résonance au moins au double de la fréquence du signal d'ionisation la plus faible à analyser, selon le théorème de Shannon, et ainsi augmenter la bande passante du dispositif de mesure alternatif. Comme cela apparaît sur la figure 3, la compensation en fréquence est réalisée d'une part en ajoutant une capacité $C_{co}$ en série avec la self de fuite primaire $L_{fp}$ pour la compenser à la fréquence recherchée et d'autre part par une self $L_{co}$ en parallèle, qui avec la self magnétisante $L_m$ va résonner avec la capacité secondaire ramenée au primaire $n^2*C_s$, pour placer la fréquence de résonance à la fréquence à atteindre. Par exemple, en plaçant la fréquence de résonance à 50 KHz, il est possible de détecter des variations d'impédance pour des fréquences inférieures à 25 KHz. Pratiquement, on peut se contenter de détecter les variations à une fréquence inférieure à 10 KHz.

Selon une autre caractéristique de l'invention, la mesure de l'impédance d'ionisation ramenée au primaire de la bobine est réalisée avec attaque de l'enroulement primaire de la bobine par un courant d'amplitude constante, délivré par un oscillateur asservi sur la fréquence de résonance parallèle de la bobine, et lecture de la tension aux bornes de la bobine. Dans le cas particulier décrit auparavant nécessitant une compensation de la bobine, l'oscillateur est asservi sur la fréquence de résonance parallèle de la bobine obtenue par la compensation.

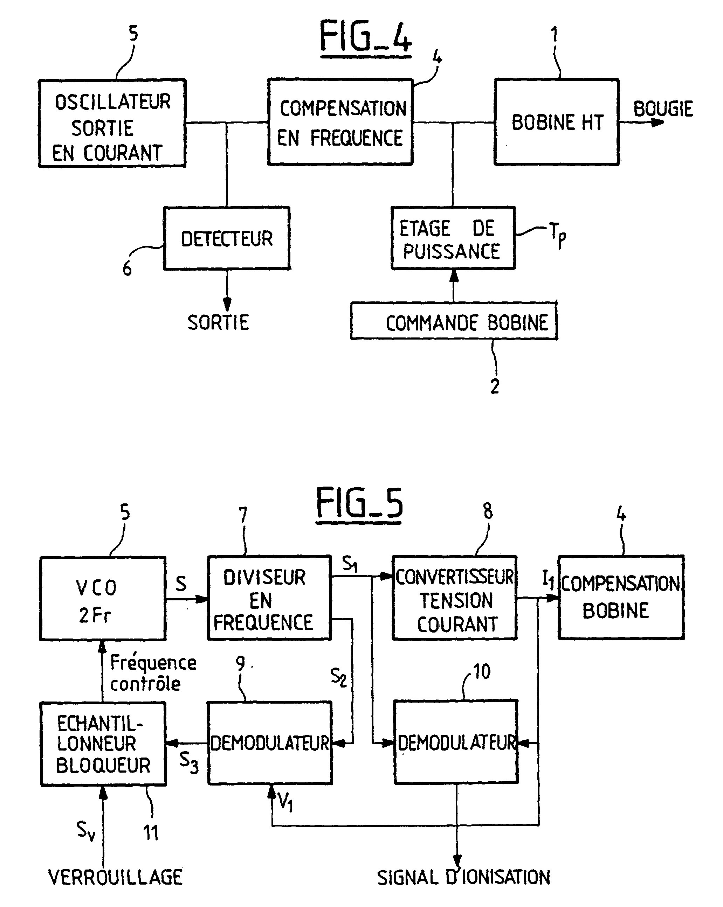

La figure 4 est un schéma de principe du dispositif mettant en oeuvre le procédé de diagnostic de l'allumage selon l'invention, à partir de la mesure de l'impédance d'ionisation des gaz entre les électrodes de la bougie 3, dont l'étincelle est provoquée par une bobine 1 commandée par un module électronique 2 à travers un étage de puissance $T_p$. Ce dispositif comprend un circuit 4 de compensation en fréquence de la bobine 1, un circuit oscillateur 5 délivrant un courant d'amplitude constante au circuit de compensation et asservi sur la fréquence de résonance parallèle de la bobine, et un circuit 6 de détection de l'impédance d'ionisation par mesure de la tension aux bornes de la bobine, suivie d'un redressement. Dans le cas où la fréquence de résonance parallèle de la bobine est suffisante, le dispositif ne comprend pas de circuit de compensation en fréquence.

Selon une première variante de réalisation de l'invention, l'asservissement en fréquence de l'oscillateur sur la fréquence de résonance parallèle de la bobine est réalisé par démodulation synchrone de la tension de la bobine en quadrature du signal délivré par l'oscillateur, qui est en phase avec le courant de commande de la bobine, avec possibilité de verrouillage de la fréquence de l'oscillateur pendant les phases d'étincelles dans les bougies et les phases de mesure. Pour cela, comme le montre la figure 5, le dispositif de diagnostic selon l'invention comprend un oscillateur 5 délivrant un signal de tension S à une fréquence égale au double de la fréquence de résonance obtenue pour la bobine par compensation. Il comprend ensuite un circuit 7 diviseur en fréquence du signal S de l'oscillateur en deux signaux de tension, un premier $S_1$ en phase avec le signal S et un second $S_2$ en quadrature de phase avec le premier $S_1$, chacun de fréquence égale à la moitié de la fréquence du signal S. Un circuit 8 convertisseur tension-courant transforme le premier signal de tension $S_1$ en un courant $I_1$ destiné à exciter la bobine. Le second signal $S_2$ en quadrature de phase est envoyé vers un circuit démodulateur 9, qui reçoit de plus la tension $V_1$ de la bobine. Un signal $S_3$, résultat du produit de la démodulation de la tension $V_1$ par le second signal $S_2$ en quadrature, est envoyé à travers un circuit échantillonneur-bloqueur 11 à l'oscillateur 5, dont il pilote la fréquence. Ainsi, l'oscillateur 5 est asservi de façon à annuler la composante en quadrature du signal de tension afin d'être calé sur la fréquence de résonance parallèle de la bobine. La mesure de l'impédance d'ionisation est faite en sortie du démodulateur 10 du premier signal $S_1$ en phase avec le signal S de sortie de l'oscillateur, car la bobine étant attaquée par un courant d'amplitude constante, l'amplification de la tension à ses bornes est proportionnelle à l'impédance. Le circuit 11 échantillonneur-bloqueur peut être commandé par un signal de commande de verrouillage $S_v$, permettant de verrouiller la fréquence de l'oscillateur sur la fréquence de résonance parallèle de la bobine pendant les phases d'étincelle et les phases de mesure.

Il est aussi possible de laisser l'oscillateur 5 suivre la fréquence de résonance parallèle de la bobine pendant la mesure et de faire une lecture en fréquence du signal d'ionisation obtenu en sortie du démodulateur 9 du signal $S_2$ en quadrature de phase avec le signal S de l'oscillateur 5, recevant également la tension d'excitation de la bobine.

Le dispositif offre l'avantage, inhérent à la démodulation synchrone, d'être peu sensible au bruit en particulier d'alimentation, de verrouiller la fréquence de l'oscillateur pendant les phases où l'étincelle éclate entre les électrodes de la bougie pour qu'il ne soit pas perturbé et d'effectuer la mesure de l'impédance d'ionisation le plus rapidement possible après l'étincelle. Le dispositif permet également de verrouiller l'oscillateur pendant la phase de mesure de l'impédance, ce qui permet d'augmenter la sensibilité du dispositif en profitant du glissement en fréquence induit par l'impédance d'ionisation.

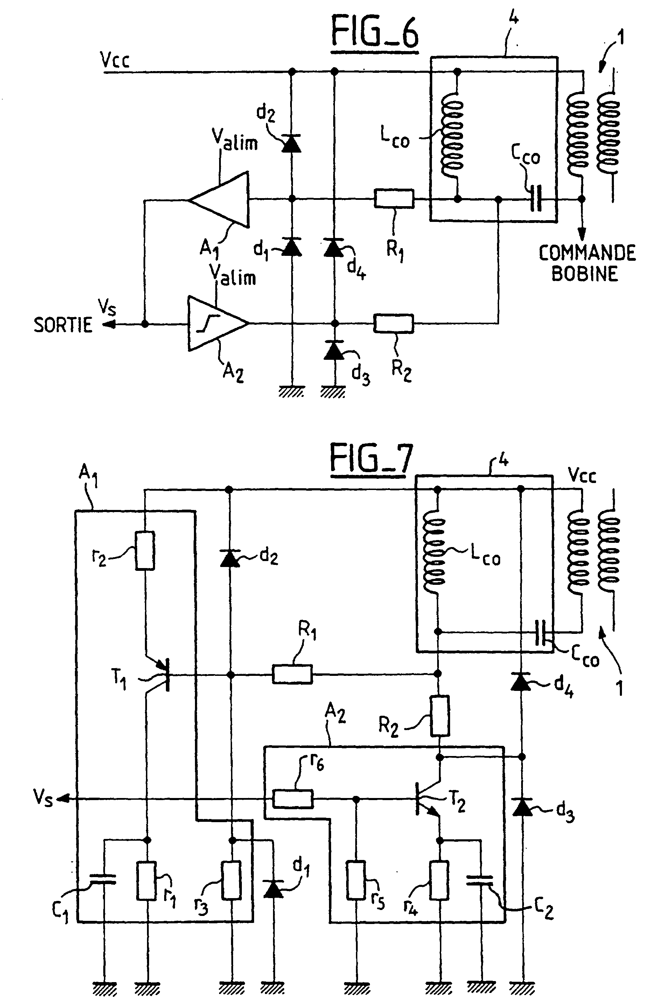

Selon une autre variante de réalisation de l'invention représentée sur la figure 6, l'asservissement de l'oscillateur sur la fréquence de résonance de la bobine est fait par la charge, c'est-à-dire par la bobine. L'oscillateur est réalisé par un premier amplificateur $A_1$ linéaire et par un second amplificateur $A_2$ non linéaire, bouclé sur le premier, et reliés au circuit 4 de compensation en fréquence de la bobine 1 à travers respectivement, une résistance $R_1$ et une résistance $R_2$ ayant pour fonction de protéger les amplificateurs contre le pic de tension au primaire de la bobine au moment de l'étincelle, la résistance $R_2$ servant également de convertisseur tension-courant. L'amplificateur non linéaire $A_2$ fonctionne en comparateur, sa tension de sortie variant entre 0 volt et sa tension d'alimentation $V_{alim}$, ce qui permet de réaliser une attaque en courant d'amplitude constante, par l'intermédiaire de la résistance $R_2$.

Des circuits de protection contre les surtensions, de l'ordre de 400 volts, arrivant au primaire de la bobine au moment des étincelles dans la bougie, sont prévus pour chaque amplificateur. L'amplificateur linéaire $A_1$ est protégé par la résistance $R_1$, montée en série entre l'amplificateur et le circuit de compensation 4, et par deux diodes $d_1$ et $d_2$ montées respectivement entre,

d'une part la masse ou la tension de la batterie, et d'autre part l'amplificateur. L'impédance d'entrée de l'amplificateur $A_1$ doit être grande devant la résistance $R_1$.

L'amplificateur non linéaire $A_2$ est protégé par la résistance $R_2$ et par deux diodes $d_3$ et $d_4$ montées respectivement entre, d'une part la masse ou la tension de la batterie, et d'autre part l'amplificateur. La mesure de l'impédance d'ionisation est déduite de la mesure de la tension de sortie $V_s$ de l'oscillateur, soit la sortie de l'amplificateur linéaire $A_1$. Selon le schéma de la figure 6, en appelant $Z_{eq}$, l'impédance équivalente de la bobine compensée en fréquence et en choisissant une valeur de la résistance $R_2$ du convertisseur tension-courant grande devant l'impédance $Z_{eq}$, on obtient la tension de sortie $V_s$ par la formule:

$$V_s = A_1 * V_{alim} * Z_{eq}/(Z_{eq}+R_2)$$

$$V_s \# A_1 * V_{alim} * Z_{eq}/R_2$$

Selon le schéma électronique d'un oscillateur asservi en fréquence, utilisé dans un dispositif de diagnostic selon l'invention et représenté sur la figure 7, l'oscillateur peut être réalisé avec deux transistors $T_1$ et $T_2$, ayant des caractéristiques de bande passante et de gain similaires, mais de polarités différentes. L'amplificateur linéaire $A_1$ est constitué par un transistor $T_1$, avec trois résistances $r_1$, $r_2$ et $r_3$ de polarisation et de contrôle de son gain, et une capacité $C_1$ utilisée pour limiter la bande du transistor, rejeter les harmoniques du signal et éviter également l'accrochage de l'oscillateur sur des fréquences de résonance plus élevées. L'amplificateur non linéaire $A_2$ est constitué par un transistor $T_2$, une résistance $r_4$ de polarisation, et deux autres résistances $r_5$ et $r_6$ qui créent, avec une capacité $C_2$ en parallèle sur la résistance $r_4$, un effet non linéaire en faisant fonctionner le transistor en comparateur. La capacité $C_2$ augmente aussi le gain de l'amplificateur ainsi réalisé.

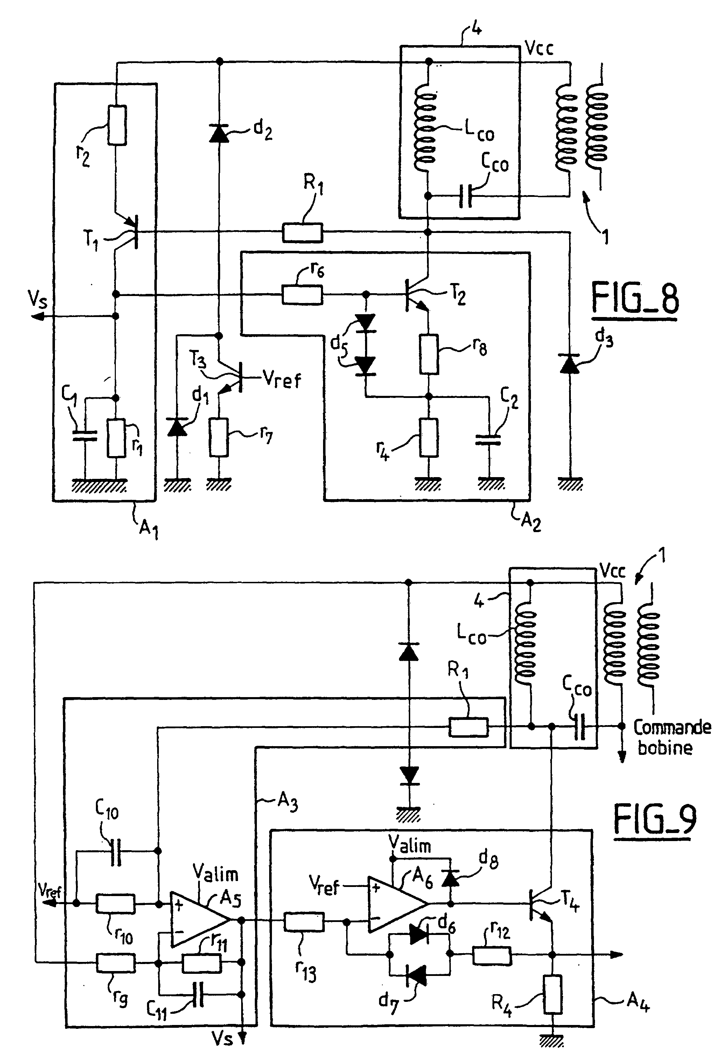

Pour améliorer la réjection par rapport à la tension d'alimentation $V_{cc}$ provenant de la batterie, on peut remplacer la résistance $r_3$ de la figure précédente par une source de courant, soit un transistor $T_3$ devant supporter les surtensions primaires, et sa résistance de polarisation $r_7$, et en utilisant le transistor $T_2$ en source de courant (figure 8). Ce transistor $T_2$ est choisi pour supporter les pics de tension de 400 Volts au primaire et n'a pas besoin de protection. C'est pourquoi les résistances $R_2$, $r_5$ et la diode $d_4$ ont été supprimées. La diode $d_3$ sert de protection en inverse. De plus, pour que le courant du transistor $T_2$ soit indépendant de la tension de la batterie $V_{cc}$, le transistor $T_2$ ne doit plus fonctionner en saturation mais en limitation de courant, fixé par les diodes $d_5$ et la résistance $r_8$.

Selon une troisième variante de réalisation représentée sur le schéma électronique de la figure 9, l'oscillateur asservi en fréquence peut être réalisé à partir d'un amplificateur de gain non linéaire à sortie en courant, afin d'améliorer la sensibilité du dispositif de diagnostic et sa réjection de l'alimentation. Cet oscillateur selon l'invention est constitué d'une part d'un amplificateur $A_3$ différentiel linéaire de gain positif par rapport à la tension mesurée aux bornes de la bobine 1. Cet amplificateur différentiel $A_3$ est constitué par la résistance $R_1$ et par un amplificateur opérationnel $A_5$ dont l'entrée négative, qui ne présente pas une impédance constante, est reliée à la tension de la batterie $V_{cc}$ qui n'est pas sensible à cette charge, par l'intermédiaire d'une résistance $r_9$ de valeur égale à la résistance $R_1$. Les harmoniques de la tension aux bornes de la bobine sont éliminées par deux filtres de mêmes valeurs $r_{10}$ et $C_{10}$ d'une part et $r_{11}$ et $C_{11}$ d'autre part, qui évitent aussi le calage de l'oscillateur sur ces harmoniques. L'oscillateur est constitué d'autre part par un amplificateur $A_4$, constitué d'un amplificateur opérationnel $A_6$, associé à un transistor $T_4$, deux diodes $d_6$ et $d_7$ montées avec une résistance $r_{12}$ en contre-réaction sur l'amplificateur, et une résistance $r_{13}$, qui réalise un convertisseur tension-courant de gain non linéaire négatif. Une diode $d_8$ sert de protection contre les surtensions primaires. Le transistor $T_4$ doit pouvoir supporter les surtensions au primaire de la bobine. Le choix de ces composants permet une amplification considérable de la sensibilité du dispositif de diagnostic aux impédances élevées d'ionisation. La tension crête $V_{Smax}$ du signal de sortie $V_S$ est une fonction harmonique de l'impédance équivalente $Z_{eq}$ de la bobine compensée, ramenée au primaire:

$$V_{Smax} = \frac{0.6^* Z_{eq}}{R_4 - (r_{12}/r_{11})^*(r_{10}/r_9)^* Z_{eq}}$$

Le dispositif de diagnostic du fonctionnement d'un moteur thermique selon l'invention ne nécessite que l'adjonction de modules électroniques dans le calculateur électronique d'injection ou le module de puissance d'allumage, sans connectique supplémentaire puisque la mesure de l'impédance d'ionisation est faite au primaire de la bobine d'allumage.

## Revendications

1. Procédé de diagnostic de l'allumage d'un moteur à combustion interne, comprenant une bobine d'allumage (1) dont l'enroulement primaire est relié à un module électronique (2) de puissance d'allumage et dont l'enroulement secondaire est relié à au moins une bougie (3) d'un cylindre, par détection du signal d'ionisation des gaz dans les cylindres du moteur, **caractérisé en ce qu'**il comprend :

   - une première étape de compensation en fréquence de la bobine pour augmenter sa fréquence de résonance à une valeur supérieure à deux fois la fréquence du signal d'ionisation à détecter ;
   - une deuxième étape de mesure de l'impédance d'ionisation ($Z_{ion}$) des gaz, avec attaque de l'enroulement primaire de la bobine par un courant d'amplitude constante, délivrée par un oscillateur (5) asservi sur la fréquence de résonance parallèle de la bobine, et lecture de la tension aux bornes de la bobine (1).

2. Procédé de diagnostic selon la revendication 1, **caractérisé en ce que** l'asservissement en fréquence de l'oscillateur (5) sur la fréquence de résonance parallèle de la bobine (1) est réalisé par démodulation synchrone de la tension de la bobine en quadrature du signal (S) délivré par l'oscillateur et qui est en phase avec le courant de commande de la bobine.

3. Procédé de diagnostic selon la revendication 1, **caractérisé en ce que** l'asservissement en fréquence de l'oscillateur (5) sur la fréquence de résonance parallèle de la bobine (1) est réalisé par démodulation synchrone de la tension aux bornes de la bobine en quadrature du signal (S) délivré par l'oscillateur, avec verrouillage de la fréquence de l'oscillateur pendant les phases d'étincelles dans les bougies et les phases de mesure.

4. Procédé de diagnostic selon la revendication 1, **caractérisé en ce que** l'asservissement en fréquence de l'oscillateur (5) sur la fréquence de résonance parallèle de la bobine (1) est réalisé par pilotage de l'oscillateur par la charge.

5. Dispositif de diagnostic de l'allumage d'un moteur à combustion interne mettant en oeuvre le procédé selon Tune des revendications 1 à 4, **caractérisé en ce qu'**il comprend :

   - un circuit (4) de compensation en fréquence de la bobine (1) constitué par une capacité ($C_{co}$), en série avec l'enroulement primaire de la bobine et dont la valeur permet de compenser l'inductance de fuite ($L_{fp}$) de la bobine ramenée au primaire à la fréquence recherchée, et par une inductance ($L_{co}$) en parallèle avec l'enroulement primaire et dont la valeur permet d'augmenter la fréquence de résonance de la bobine;
   - un circuit (5) oscillateur délivrant un courant d'amplitude constante au circuit (4) de compensation et asservi sur la fréquence de résonance parallèle de la bobine (1) ;
   - un circuit (6) de détection de l'impédance d'ionisation par mesure de la tension aux bornes de la bobine.

**6.** Dispositif de diagnostic selon la revendication 5, **caractérisé en ce que**, l'asservissement en fréquence de l'oscillateur (5) sur la fréquence de résonance parallèle de la bobine (1) étant réalisé par démodulation synchrone de la tension de la bobine, il comprend de plus :

- un circuit (7) diviseur par deux en fréquence du signal (S) issu de l'oscillateur (5) en deux signaux de tension, un premier ($S_1$) en phase avec le signal (S) et un second ($S_2$) en quadrature de phase avec le premier ($S_1$);
- un circuit (8) convertisseur tension-courant du premier signal ($S_1$), délivrant un courant ($I_1$) destiné à exciter la bobine (1);
- un circuit (10) démodulateur recevant d'une part le premier signal ($S_1$) et d'autre part la tension ($V_1$) de la bobine (1), et délivrant le signal d'ionisation variant en fréquence à partir duquel est faite la mesure de l'impédance d'ionisation ($Z_{ion}$);
- un circuit (9) démodulateur, recevant d'une part le signal ($S_2$) en quadrature et d'autre part la tension ($V_1$) de la bobine (1), et délivrant un signal ($S_3$) résultant de la démodulation de la tension (V1) de la bobine par le second signal ($S_2$) ;
- un circuit (11) échantillonneur-bloqueur recevant le signal ($S_3$) issu du circuit démodulateur (9), calant la fréquence de l'oscillateur (5) sur la fréquence de résonance parallèle de la bobine (1).

**7.** Dispositif de diagnostic selon la revendication 6, **caractérisé en ce que** le circuit (11) échantillonneur-bloqueur reçoit de plus un signal de commande de verrouillage ($S_v$) verrouillant la fréquence de l'oscillateur (5) sur la fréquence de résonance parallèle de la bobine (1) pendant les phases d'étincelle dans les bougies et les phases de mesure.

**8.** Dispositif de diagnostic selon la revendication 5, **caractérisé en ce que** l'oscillateur (5) est réalisé par deux amplificateurs ($A_1, A_2$) bouclés et associés chacun à un circuit de protection contre les surtensions au primaire de la bobine (1) au moment de l'étincelle dans les bougies, et **en ce qu'**un des amplificateurs fonctionne en comparateur avec la tension d'alimentation ($V_{cc}$) du dispositif et est relié en sortie à un convertisseur tension-courant attaquant le circuit (4) de compensation de la bobine.

**9.** Dispositif de diagnostic selon la revendication 8, **caractérisé en ce que** le circuit de protection d'un des amplificateurs ($A_1$), respectivement ($A_2$), est constitué dune part d'une résistance ($R_1$), respectivement ($R_2$), telle que l'impédance d'entrée de l'amplificateur lui est très supérieure et d'autre part de deux diodes ($d_1$, $d_2$), respectivement ($d_3, d_4$), montées respectivement entre, d'une part la masse ou la tension de la batterie, et d'autre part l'amplificateur, la résistance ($R_2$) servant également de convertisseur tension-courant.

**10.** Dispositif de diagnostic selon la revendication 8, **caractérisé en ce que** :

- le premier amplificateur ($A_1$) est réalisé à partir d'un transistor ($T_1$) associé à trois résistances ($r_1$, $r_2$ et $r_3$) de polarisation et de contrôle de gain, et à une capacité ($C_1$) limitant la bande du transistor ($T_1$) et rejetant les harmoniques du signal d'attaque de la bobine;
- le second amplificateur ($A_2$) non linéaire est réalisé à partir d'un transistor ($T_2$) associé à une résistance de polarisation ($r_4$) et à une capacité ($C_2$) augmentant le gain du transistor et créant un effet non linéaire avec deux résistances ($r_5$, et $r_6$,) lui permettant de fonctionner en comparateur.

**11.** Dispositif de diagnostic selon la revendication 8, **caractérisé en ce que** :

- le premier amplificateur ($A_1$) est réalisé à partir d'un transistor ($T_1$) associé à deux résistances ($r_1$ et $r_2$) de polarisation et de contrôle de gain et à une capacité ($C_1$) limitant la bande du transistor ($T_1$) et rejetant les harmoniques du signal d'attaque de la bobine;
- un transistor ($T_3$) servant de source de courant, choisi pour supporter les surtensions primaires, associé à une résistance ($r_7$) de polarisation;
- le second amplificateur ($A_2$) non linéaire est réalisé à partir d'un transistor ($T_2$), associé à deux résistances de polarisation ($r_4$ et $r_6$) et à une capacité ($C_2$) en parallèle sur la résistance ($r_4$) augmentant le gain du transistor et une diode ($d_3$) de protection en inverse, ledit transistor ($T_2$) fonctionnant en limitation de courant fixé par deux diodes (d5) et une résistance ($r_8$).

**12.** Dispositif de diagnostic selon la revendication 8, **caractérisé en ce que** l'oscillateur (5) asservi en fréquence est réalisé par :

- un amplificateur ($A_3$) différentiel linéaire de gain positif par rapport à la tension aux bornes de la bobine (1), constitué par une résistance ($R_1$) et un amplificateur opérationnel ($A_5$) dont l'entrée négative est reliée à la tension de la batterie ($V_{cc}$) par l'intermédiaire d'une résistance ($r_9$) ;
- deux filtres ($r_{10}$, $C_{10}$) et ($r_{11}$, $C_{11}$) de mêmes valeurs, destinés à éliminer les harmoniques de la tension aux bornes de la bobine et à éviter le calage de l'oscillateur sur ces harmoniques;

-   un amplificateur ($A_4$), constitué d'un amplificateur opérationnel ($A_6$), associé à un transistor ($T_4$) supportant les surtensions primaires, deux diodes ($d_6$ et $d_7$) montées avec une résistance ($r_{12}$) en contre-réaction sur l'amplificateur, et une résistance ($r_{13}$), pour réaliser un convertisseur tension-courant de gain non linéaire négatif;
-   une diode ($d_8$) servant de protection contre les surtensions primaires.

**Claims**

1.  A diagnostic method for the ignition of an internal combustion engine comprising an ignition coil (1) whose primary winding is connected to an electronic ignition power unit (2) and whose secondary winding is connected to at least one spark plug (3) of a cylinder, by detection of the ionisation signal of the gases in the engine cylinders, **characterised in that** it comprises

    -   a first stage of frequency compensation of the coil in order to increase its resonance frequency to a value of more than double the frequency of the ionisation signal to be detected,
    -   a second stage of measurement of the ionisation impedance ($Z_{ion}$) of the gases, with the supply of the primary winding of the coil by a current of constant amplitude, supplied by a oscillator (5) controlled by the parallel resonance frequency of the coil, and reading of the voltage at the terminals of the coil (1).

2.  A diagnostic method as claimed in claim I, **characterised in that** the frequency control of the oscillator (5) by the parallel resonance frequency of the coil (1) takes place by synchronous demodulation of the voltage of the coil in quadrature with the signal (S) supplied by the oscillator and which is in phase with the coil control current.

3.  A diagnostic method as claimed in claim 1, **characterised in that** the frequency control of the oscillator (5) by the parallel resonance frequency of the coil (1) takes place by synchronous demodulation of the voltage at the terminals of the coil in quadrature with the signal (S) supplied by the oscillator, with locking of the frequency of the oscillator during the spark plug sparking and measurement phases.

4.  A diagnostic method as claimed in claim 1, **characterised in that** the frequency control of the oscillator (5) by the parallel resonance frequency of the coil (1) takes place by piloting of the oscillator by the load.

5.  A diagnostic device for the ignition of an internal combustion engine applying the method as claimed in one of claims I to 4, **characterised in that** it comprises:

    -   a frequency compensation circuit (4) for the coil (1) formed by a capacitor ($C_{co}$), in series with the primary winding of the coil and whose value makes it possible to compensate the leakage inductance ($L_{fp}$) of the coil returned to the primary at the desired frequency, and by an inductor ($L_{co}$) in parallel with the primary winding and whose value makes it possible to increase the resonance frequency of the coil;
    -   an oscillator circuit (5) supplying a current of constant amplitude to the compensation circuit (4) and controlled by the parallel resonance frequency of the coil (1);
    -   a circuit (6) for the detection of the ionisation impedance by measurement of the voltage at the terminals of the coil.

6.  A diagnostic device as claimed in claim 5, **characterised in that** as the frequency control of the oscillator (5) by the parallel resonance frequency of the coil (1) is carried out by synchronous demodulation of the voltage of the coil, it further comprises:

    -   a circuit (7) halving the frequency of the signal (S) from the oscillator (5) into two voltage signals, a first ($S_1$) in phase with the signal (S) and a second ($S_2$) in phase quadrature with the first ($S_1$);
    -   a voltage-current converter circuit for the first signal ($S_1$) supplying a current ($I_1$) adapted to excite the coil (1);
    -   a demodulator circuit (10) receiving, on the one hand, the first signal ($S_1$) and, on the other hand, the voltage ($V_1$) of the coil (1), and supplying the ionisation signal varying in frequency from which the ionisation impedance ($Z_{ion}$) is measured;
    -   a demodulator circuit (9) receiving, on the one hand, the signal ($S_2$) in quadrature and, on the other hand, the voltage ($V_1$) of the coil (1), and supplying a signal ($S_3$) resulting from the demodulation of the voltage ($V_1$) of the coil by the second signal ($S_2$);
    -   a sampling-locking circuit (11) receiving the signal ($S_3$) from the demodulator circuit (9), setting the frequency of the oscillator (5) to the parallel resonance frequency of the coil (1).

7.  A diagnostic device as claimed in claim 6, **characterised in that** the sampling-locking circuit (11) further receives a locking control signal ($S_v$) locking the frequency of the oscillator (5) to the parallel resonance frequency of the coil (1) during the phases of sparking in the spark plugs and measurement.

8. A diagnostic device as claimed in claim 5, **characterised in that** the oscillator (5) is formed by two looped amplifiers ($A_1$, $A_2$) each associated with a circuit protecting against overvoltages at the primary of the coil (1) at the moment of sparking in the spark plugs, and **in that** one of the amplifiers functions as a comparator with the supply voltage ($V_{cc}$) of the device and is connected as output to a voltage-current converter supplying the compensation circuit (4) of the coil.

9. A diagnostic device as claimed in claim 8, **characterised in that** the protection circuit of one of the amplifiers ($A_1$) and ($A_2$) is formed, on the one hand, by a resistor ($R_1$) and ($R_2$) such that the input impedance of the amplifier is much higher than it and, on the other hand, by two diodes ($d_1$, $d_2$) and ($d_3$, $d_4$) mounted respectively between, on the one hand, earth or the battery voltage and, on the other hand, the amplifier, the resistor ($R_2$) also acting as a voltage-current converter.

10. A diagnostic device as claimed in claim 8, **characterised in that**:

    - the first amplifier ($A_1$) is formed from a transistor ($T_1$) associated with three polarisation and gain control resistors ($r_1$, $r_2$, $r_3$) and a capacitor ($C_1$) limiting the band of the transistor ($T_1$) and rejecting the harmonics of the coil supply signal;
    - the second non-linear amplifier ($A_2$) is formed from a transistor ($T_2$) associated with a polarisation resistor ($r_4$) and a capacitor ($C_2$) increasing the gain of the transistor and creating a non-linear effect with two resistors ($r_5$ and $r_6$) enabling it to function as a comparator.

11. A diagnostic device as claimed in claim 8, **characterised in that**:

    - the first amplifier ($A_1$) is formed from a transistor ($T_1$) associated with two polarisation and gain control resistors ($r_1$, $r_2$) and a capacitor ($C_1$) limiting the band of the transistor ($T_1$) and rejecting the harmonics of the coil supply signal;
    - a transistor ($T_3$) acting as a current source, chosen to withstand the primary overvoltages, associated with a polarisation resistor ($r_7$);
    - the second non-linear amplifier ($A_2$) is formed from a transistor ($T_2$) associated with two polarisation resistors ($r_4$, $r_6$) and a capacitor ($C_2$) in parallel on the resistor ($r_4$) increasing the gain of the transistor and an inverse protection diode ($d_3$) functioning in current limitation fixed by two diodes ($d_5$) and a resistor ($r_8$).

12. A diagnostic device as claimed in claim 8, **characterised in that** the frequency controlled oscillator (5) is formed by:

    - a differential linear amplifier ($A_3$) of positive gain with respect to the voltage at the terminals of the coil (1), formed by a resistor ($R_1$) and an operational amplifier ($A_5$) whose negative input in connected to the battery voltage ($V_{cc}$) by means of a resistor ($r_9$);
    - two filters ($r_{10}$, $C_{10}$) and ($r_{11}$, $C_{11}$) of the same values, adapted to eliminate the harmonics of the voltage at the terminals of the coil and to prevent the setting of the oscillator to these harmonics;
    - an amplifier ($A_4$) formed by an operational amplifier ($A_6$), associated with a transistor ($T_4$) withstanding the primary overvoltages, two diodes ($d_6$ and $d_7$) mounted with a resistor ($r_{12}$) in negative feedback on the amplifier, and a resistor ($r_{13}$), to form a voltage-current converter of negative non-linear gain;
    - a diode ($d_8$) acting as protection against the primary overvoltages.

## Patentansprüche

1. Diagnoseverfahren für die Zündung eines Verbrennungsmotors durch Erfassen des Ionisierungssignals der Gase in den Zylindern des Motors, der eine Zündspule (1) aufweist, dessen Primärwicklung mit einem elektronischen Leistungmodul (2) für die Zündung verbunden ist und dessen Sekundärwicklung mit mindestens einer Kerze (3) eines Zylinders verbunden ist , **dadurch gekennzeichnet, dass** es folgendes aufweist:

    - eine erste Etappe zum Frequenzausgleich der Spule, um deren Resonanzfrequenz auf einen Wert zu erhöhen, der zweimal größer ist als die zu erfassende Frequenz des Ionisierungssignals;
    - eine zweite Etappe zur Messung der Ionisierungsimpedanz ($Z_{ion}$) der Gase mit Ansteuerung der Primärwicklung der Spule durch einen konstanten Amplitudenstrom, der von einem durch die Parallelresonanzfrequenz der Spule gesteuerten Schwingungsgeber (5) geliefert wird, und Ansteuern der Spannung an den Klemmen der Spule (1).

2. Diagnoseverfahren nach Anspruch 1, **dadurch gekennzeichnet, dass** die Frequenzsteuerung des Schwingungsgebers (5) auf die Parallelresonanzfrequenz der Spule (1) durch synchrone Demodulation der Spannung der Spule (1) 90° phasenverschoben zu dem vom Schwingungsgeber ausgegebenen Signal (S) durchgeführt wird, welches in Phase ist mit dem Steuerstrom der Spule.

3. Diagnoseverfahren nach Anspruch 1, **dadurch gekennzeichnet, dass** die Frequenzsteuerung in der Frequenz des Schwingungsgebers (5) auf die Parallelresonanzfrequenz der Spule (1) durch synchrone Demodulation der Spannung der Spule (1) 90° phasenverschoben zu dem vom Schwingungsgeber ausgegebenen Signals (S) durchgeführt wird, mit Verriegelung der Frequenz des Schwingungsgebers während der Funkenphasen in den Kerzen und den Messphasen.

4. Diagnoseverfahren nach Anspruch 1, **dadurch gekennzeichnet, dass** die Frequenzsteuerung des Schwingungsgebers (5) auf die Parallelresonanzfrequenz der Spule (1) durch Steuerung des Schwingungsgebers durch die Last durchgeführt wird.

5. Vorrichtung zur Diagnose der Zündung eines Verbrennungsmotors , zur Durchführung des Verfahrens nach einem der Ansprüche 1 bis 4, **dadurch gekennzeichnet, dass** sie folgendes aufweist:

   - einen Frequenzausgleichskreis (4) für die Spule (1) , welcher aus einer in Serie mit der Primärwicklung der Spule geschalteten Kapazität ($C_{co}$) besteht und dessen Wert es erlaubt, die Streuinduktivität ($L_{fp}$) der auf die Primärseite zur gesuchten Frequenz gebrachten Spule auszugleichen und **gekennzeichnet durch** eine Induktivität ($L_{co}$) ,welche parallel mit der Primärwicklung geschaltet ist und dessen Wert es erlaubt, die Resonänzfrequenz der Spule zu erhöhen;
   - einen Schwingungsgeberkreis (5), welcher einen konstanten Amplitudenstrom an den Ausgleichskreis (4) liefert und welcher mit der Parallelresonanzfrequenz der Spule angesteuert wird;
   - einen Erfassungskreis (6) für die Ionisierungsimpedanz **durch** Messen der Spannung an den Klemmen der Spule.

6. Diagnosevorrichtung nach Anspruch 5, **dadurch gekennzeichnet, dass** die Frequenzsteuerung des Schwingungsgebers (5) auf die Parallelresonanzfrequenz der Spule (1) durch synchrone Demodulation der Spannung der Spule (1) durchgeführt wird, welche außerdem folgendes aufweist:

   - einen Kreis (7) der die Frequenz des Signals (S) aus dem Schwingungsgeber (5) durch zwei teilt in zwei Spannungssignale, wobei ein erstes Signal ($S_1$) in Phase ist mit dem Signal (S) und ein zweites Signal ($S_2$) um 90° phasenverschoben zu dem ersten ($S_1$) ist; einen Umformerkreis (8) Spannung-Strom für das erste Signal ($S_1$), welcher einen Strom ($I_1$) liefert, der dazu dient, die Spule (1) anzuregen;
   - einen Demodulationskreis (10), welcher einerseits das erste Signal ($S_1$) und andererseits die Spannung ($V_1$) der Spule (1) empfängt und das frequenzvariante Ionisierungssignal liefert, von dem aus die Messung der Ionisierungimpedanz ($Z_{ion}$) durchgeführt wird;
   - einen Demodulationskreis (9), welcher einerseits das um 90° phasenverschobene Signal (S2) und andererseits die Spannung ($V_1$) der Spule (1) empfängt und ein Signal liefert, das aus der Demodulation der Spannung ($V_1$) der Spule (1) durch das zweite Signal ($S_2$) resultiert;
   - einen Sampler-Blockier -Kreis (11) welcher das Signal ($S_3$) aus dem Demodulationskreis (9) erhält , und die Frequenz des Schwingungsgebers auf die Parallelresonanzfrequenz der Spule (1) fixiert.

7. Diagnosevorrichtung nach Anspruch 6, **dadurch gekennzeichnet, dass** der Sampler-Blockier-Kreis (11) außerdem ein Blockierungssteuersignal ($S_v$) empfängt , welches die Frequenz des Schwingungsgebers (5) auf die Parallelresonanzfrequenz der Spule (1) während der Funkenphasen in den Kerzen und der Messphasen verriegelt.

8. Diagnosevorrichtung nach Anspruch 5, **dadurch gekennzeichnet, dass** der Schwingungsgeber (5) durch zwei in Schleife befindliche Verstärker ($A_1$, $A_2$) ausgeführt ist, wobei jeder einem Schutzkreis gegen Überspannungen auf der Primärseite der Spule (1) im Augenblick des Funkens in den Kerzen zugeordnet ist, und dass einer der Verstärker als Komparator mit der Speisespannung ($V_{cc}$) der Vorrichtung funktioniert und am Ausgang angeschlossen ist an einen Umformer Spannung-Strom, welcher den Ausgleichskreis der Spule (1) ansteuert.

9. Diagnosevorrichtung nach Anspruch 8, **dadurch gekennzeichnet, dass** der Schutzkreis eines der Verstärker ($A_1$), bzw. ($A_2$) einerseits aus einem Widerstand ($R_1$), bzw ($R_2$), sodass die Eingangsimpedanz des Verstärkers sehr viel grösser als er ist, und andererseits aus zwei Dioden ($d_1$, $d_2$) bzw. ($d_3$, $d_4$) gebildet ist, welche jeweils montiert sind zwischen einerseits Masse oder die Spannung der Batterie und andererseits den Verstärker, wobei der Widerstand ($R_2$) ebenfalls als Umformer Spannung-Strom dient.

10. Diagnosevorrichtung nach Anspruch 8, **dadurch gekennzeichnet, dass** :

- der erste Verstärker ($A_1$) durch einen Transistor ($T_1$) realisiert ist, der drei Polarisierungsund Verstärkungskontroll-Widerständen ($r_1$, $r_2$, $r_3$) und eine das Band des Transistors ($T_1$) begrenzende und die Harmonischen des Ansteuerungssignals der Spule unterdrückenden Kapazität ($C_1$) zugeordnet ist;

- der zweite nicht lineare Verstärker ($A_2$) realisiert ist mit einem Transistor ($T_2$), der einem Polarisierungswiderstand ($r_4$) und einer die Verstärkung des Transistors erhöhenden und einen nicht linearen Effekt erzeugenden Kapazität ($C_2$) mit zwei Widerständen ($r_5$ und $r_6$) zugeordnet ist, die es ihm erlauben, als Komparator zu funktionieren.

11. Diagnosevorrichtung nach Anspruch 8, **dadurch gekennzeichnet, dass**:

- der erste Verstärker ($A_1$) durch einen Transistor ($T_1$) realisiert ist, der zwei Polarisierungsund Verstärkungskontroll-Widerständen ($r_1$ und $r_2$) und einer das Band des Transistors ($T_1$) begrenzenden und die Harmonischen des Ansteuerungssignals der Spule unterdrückenden Kapazität ($C_1$) zugeordnet ist;
  ein Transistor ($T_3$) vorgesehen ist, der als Stromquelle dient und so gewählt ist, dass er die primären Überspannungen unterstützt, und der einem Polarisierungswiderstand ($r_7$) zugeordnet ist;

- der zweite nicht lineare Verstärker ($A_2$) durch einen Transistor ($T_2$), der zwei Polarisierungswiderständen ($r_4$ und $r_6$) und einer zum Widerstand ($r_4$) parallelen Kapazität ($C_2$) welche die Verstärkung des Transistors erhöht, zugeordnet ist und eine inverse Schutzdiode ($d_3$) realisiert ist, wobei der besagte Transistor ($T_2$) als durch zwei Dioden ($d_5$) und einen Widerstand ($r_8$) fixierter Strombegrenzer wirkt.

12. Diagnosevorrichtung nach Anspruch 8, **dadurch gekennzeichnet, dass** der frequenzgesteuerte Schwingungsgeber (5) gebildet ist aus:

- einem linearen Differentialverstärker ($A_3$) mit positiver Verstärkung bezogen auf die an den Klemmen der Spule (1) gemessene Spannung, der aus einem Widerstand ($R_1$) und einem Operationsverstärker ($A_5$) besteht, dessen negativer Eingang mit der Spannung der Batterie ($V_{cc}$) über einen Widerstand $r_9$, verbunden ist;

- zwei Filtern ($r_{10}$, $C_{10}$) und ($r_{11}$) und ($c11$) mit gleichem Wert, die dazu bestimmt sind, die Harmonischen der Spannung an den Klemmen der Spule zu eliminieren und die Fixierung des Schwingungsgebers auf diesen Harmonischen zu verhindern;

- einem Verstärker ($A_4$), welcher aus einem einem die primären Überspannungen unterstützenden Transistor ($T_4$) zugeordneten Operationsverstärker ($A_6$), zwei mit einem Widerstand ($r_{12}$) in Gegenreaktion auf den Verstärker montierten Dioden ($d_6$) und ($d_7$) und - einem Widerstand ($r_{13}$) gebildet ist, um einen Spannungs-Strom-Umformer mit nicht linearer negativer Verstärkung zu verwirklichen;

- einer Diode ($d_8$), die als Schutz gegen die primären Überspannungen dient.

## FIG_1

## FIG_2

## FIG_3

## FIG_4

OSCILLATEUR SORTIE EN COURANT — 5

COMPENSATION EN FREQUENCE — 4

BOBINE HT — 1 → BOUGIE

DETECTEUR — 6 → SORTIE

ETAGE DE PUISSANCE — $T_p$

COMMANDE BOBINE — 2

## FIG_5

VCO 2Fr — 5

$S$ →

DIVISEUR EN FREQUENCE — 7

$S_1$ →

CONVERTISSEUR TENSION COURANT — 8

$I_1$ →

COMPENSATION BOBINE — 4

Fréquence contrôle

ECHANTIL-LONNEUR BLOQUEUR — 11

$S_3$

DEMODULATEUR — 9

$S_2$

$V_1$

DEMODULATEUR — 10

$S_v$

VERROUILLAGE

SIGNAL D'IONISATION

## FIG_6

## FIG_7

FIG_8

FIG_9